Europäisches Patentamt

European Patent Office (11) Numéro de publication : **0 155 859**

Office européen des brevets **B1**

(19)

(12) **FASCICULE DE BREVET EUROPÉEN**

(45) Date de publication du fascicule du brevet : 29.07.87

(51) Int. Cl.⁴ : **E 21 B 33/138, E 21 B 33/13, C 09 K 7/00**

(21) Numéro de dépôt : 85400177.3

(22) Date de dépôt : 04.02.85

(54) **Procédé de colmatage réversible de formations souterraines.**

(30) Priorité : 17.02.84 FR 8402400

(43) Date de publication de la demande : 25.09.85 Bulletin 85/39

(45) Mention de la délivrance du brevet : 29.07.87 Bulletin 87/31

(84) Etats contractants désignés : **DE FR GB IT NL**

(56) Documents cités :
US-A- 3 516 496
US-A- 3 640 343
US-A- 3 749 173
US-A- 4 018 286
US-A- 4 369 843

(73) Titulaire : **RHONE-POULENC RECHERCHES**
**25 Quai Paul Doumer**
**F-92408 Courbevoie Cedex (FR)**

(72) Inventeur : **Berrod, Gérard**
**75, rue du 1er Mars**
**F-69100 Villeurbanne (FR)**
Inventeur : **Maurer, Robert**
**18, route de Collonges**
**F-69450 St Cyr Au Mont d'Or (FR)**
Inventeur : **Brun, Jean-Louis**
**55, rue Vauban**
**F-69006 Lyon (FR)**
Inventeur : **Bosc, Philippe**
**17, rue d'Austerlitz**
**F-69004 Lyon (FR)**
Inventeur : **Allemand, Pierre**
**52, rue des Arts**
**F-92700 Colombes (FR)**

(74) Mandataire : **Tavernier, Colette et al**
**RHONE-POULENC INTERSERVICES Service Brevets**
**Chimie 25, Quai Paul Doumer**
**F-92408 Courbevoie Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de colmatage réversible de roches poreuses pétrolifères. Plus specifiquement, l'invention concerne un procédé de colmatage temporaire, total ou partiel, à l'aide de gels de silicates, utile dans des opérations de forage, de reconditionnement de puits et de traitement de puits en cours de production.

L'emploi d'agents colmatants destinés à réduire ou à supprimer la perméabilité de formations souterraines dans le traitement des puits de pétrole est bien connu dans la technique. Des techniques de colmatage permanent ou temporaire sont utilisées dans les opérations de forage, de reconditionnement de puits, de complétion, de stimulation et de récupération tertiaire. Des fluides pour emplois dans lesquels un colmatage temporaire et réversible est requis ont été décrits par exemple dans les brevets US-A-3 516 496 et US-A-4 369 843. Selon ces procédés, le colmatage est obtenu à l'aide de solutions de polymères organiques. Selon un autre procédé décrit dans le brevet US-A-4 018 286, on met en oeuvre des solutions salines sursaturées de haute densité. Les procédés de colmatage temporaire de l'art antérieur ont pour inconvénients d'être peu sûrs quant à leur tenue en température et à leur longivité ; la destruction du gel polymérique est souvent difficile à maîtriser et conduit à des perméabilités résiduelles inférieures aux perméabilités initiales.

L'emploi de silicates dans l'industrie pétrolière est également connu. Les silicates sont utilisés comme additif à des mélanges de ciment ou à des résines pour boucher les zones à perte de circulation importante lors du forage ou pour éviter la communication entre plusieurs couches du réservoir lors de la cimentation des « casings ». Les silicates sont également mis en œuvre en fracturation afin d'obtenir des gels visqueux ayant des propriétés thixotropiques. Dans ces opérations, les silicates sont employés essentiellement comme additif sans réactif gélifiant. Sous forme de gel, les silicates ont été utilisés dans les opérations de récupération tertiaire pour boucher les zones à haute perméabilité afin d'empêcher des venues d'eau trop importantes dans le puits producteur. De manière générale, les gels de silicates employés jusqu'à présent dans l'industrie pétrolière sont destinés à former des colmatages permanents.

La présente invention a pour but de proposer un procédé de colmatage réversible de zones pétrolifères dans lequel les durées de colmatage et de destruction du gel peuvent être parfaitement maitrisées en un temps contrôlé et qui permet d'obtenir une perméabilité résiduelle sensiblement équivalente à la perméabilité initiale après un balayage limité en volume par l'agent destructeur.

L'invention a enccre pour but un procédé de colmatage temporaire dans lequel l'agent colmatant est insensible à l'eau, à l'huile et aux fluides de forage ou de traitement et est résistant aux températures élevées pouvant être rencontrées dans les formations souterraines, (juqu'à environ 200 °C).

Selon l'invention, le procédé de colmatage temporaire dans une formation souterraine pénétrée par un puits de forage est caractérisé en ce que l'on injecte dans la formation une composition aqueuse comprenant un silicate de métal alcalin et un agent gélifiant, on laisse gélifier la composition et on maintient le gel pendant le temps désiré pour le colmatage, puis on injecte une solution aqueuse alcaline de manière à détruire le gel.

Plus spécifiquement, le procédé est caractérisé en ce que l'on injecte dans une formation souterraine devant être temporairement colmatée, une composition aqueuse comprenant un silicate de métal alcalin et un agent gélifiant, dans laquelle le rapport molaire $SiO_2/M_2O$ est compris entre 2,5 et 5, le coefficient de neutralisation est compris entre 0,25 et 1 et la concentration en silice est comprise entre 5 et 25 % en poids par rapport au volume total de la composition, puis on laisse durcir la composition, la perméabilité de la formation étant réduite à une valeur suffisamment faible pour étanchéifier la dite formation à l'eau, à l'huile et aux fluides de forage et de traitement tout en permettant la pénétration ultérieure d'une solution alcaline dans les conditions de température et pression utilisées.

La perméabilité de la formation après colmatage est favorablement réduite à une valeur comprise généralement entre 1 et 10 millidarcys qui est fonction de la formulaticn spécifique choisie.

Le procédé selon l'invention dans lequel le colmatage à l'aide de gels de silicates est détruit peut être expliqué par la contraction volumétrique du gel dans la roche. La perméabilité de la roche après colmatage n'étant pas totalement nulle, ceci facilite la pénétration ultérieure de la solution alcaline dans les pores de la roche. Tant que la solution alcaline n'a pas été mise en contact avec le gel, la formation reste imperméable et pratiquement étanche aux fluides normalement rencontrès : eau, huile, fluide de forage etc...

Les silicates que l'on emploie dans la composition de colmatage peuvent être des silicates ou polysilicates d'un ou plusieurs métaux alcalins, de préférence de sodium, dans lesquels le rapport molaire $SiO_2/M_2O$ est compris entre 2,5 et 5 (M = métal alcalin). On peut utiliser des mélanges de silicates de rapport molaire différent et/ou de métal alcalin différent. Les composés préférentiels sont les silicates de sodium de rapport $SiO_2/Na_2O$ compris entre 3 et 4.

En tant que réactif gélifiant du silicate, on peut employer tout composé de type connu hydrolysable à une température égale ou supérieure à celle de la formation rencontrée, généralement égale ou supérieure à environ 50-60 °C. Le réactif gélifiant peut être choisi par exemple parmi les diesters aliphatiques des diacides aliphatiques en $C_4$-$C_{10}$ dans lesquels le groupe alkyle contient 2 à 6 atomes de carbone et leurs mélanges entre eux ; les diesters aliphatiques des acides phtaliques dans lesquels le groupe alkyle contient 2 à 6 atomes de carbone et leurs mélanges entre eux ; les phosphates de dialkyle et/ou de trialkyle dans lesquels le groupe alkyle contient 2 à 6 atomes de carbone, et leurs mélanges entre eux ; les lactones les alkylamides en $C_3$-$C_6$.

Les agents gélifiants préférés sont les diesters aliphatiques des diacides en $C_4$-$C_6$ dans lesquels le groupe alkyle contient de 2 à 6 atomes de carbone qui peuvent être utilisés seuls ou en mélanges. On préfère tout particulièrement les succinate, glutarate et adipate de di-n-propyle, de diisopropyle, de di-isobutyle et leurs mélanges entre eux.

Les proportions relatives de l'agent gélifiant et du silicate alcalin peuvent varier entre 25 et 100 moles de gélifiant pour 100 moles de silicate, soit un coefficient de neutralisation allant de 0,25 à 1, de préférence 0,4 à 0,8.

La viscosité du mélange initial, la contraction volumétrique du gel et sa dureté dépendent, entre autres paramètres, de la concentration en silice de la composition aqueuse. Un taux de 5 à 25 % en poids de $SiO_2$ par rapport au volume total de la solution est généralement satisfaisant.

A l'intérieur de ces paramètres, la formulation spécifique (rapport $SiO_2$/$M_2O$, nature du durcisseur, coefficient de neutralisation, taux de dilution) sera déterminée dans chaque cas particulier en fonction de la température et de la pression rencontrées dans la formation rocheuse de manière à régler la dureté du gel et un temps de prise convenable qui peut être compris entre environ 1 heure et 12 heures à une température de 50 à 200 °C. Il est souhaitable en général que les conditions soient choisies pour que le temps de prise soit égal ou supérieur à environ 3 heures.

Afin d'obtenir une meilleure injectabilité de la composition de colmatage et une meilleure stabilité en température, il peut être avantageux dans certains cas d'ajouter à la formulation un agent tensioactif anionique ou non-ionique, soluble dans l'eau.

Comme agent tensioactif anionique, on peut utiliser par exemple des sels alcalins d'acides carboxyliques, des sulfonates tels que les alcoyl- et/ou aryl-sulfonates, des sulfosuccinates, des sulfates et produits sulfatés comme les alkylsulfates, les alcools sulfatés, les éthers polyglycoliques sulfatés, des dérivés phosphatés comme les alcools éthoxylés phosphatés.

Comme agent tensioactif non ionique, on peut faire appel de manière générale à des composés obtenus par condensation d'oxyde d'alcoylène avec un composé organique aliphatique ou alcoylaromatique. Des agents tensioactifs appropriés sont les alcoylphénols polyoxyéthylénés, les alcools polyoxyéthylénés, les acides gras polyoxyéthylénés, les triglycérides polyoxyéthylénés, les dérivés polyoxyéthylénés et polyoxypropylénés.

Dans la pratique, la composition de colmatage est préparée selon les techniques classiques de gélification des silicates alcalins. On introduit généralement dans la solution aqueuse de silicate alcalin maintenue à température ambiante, une solution ou dispersion aqueuse de l'agent gélifiant, l'agent tensioactif, si nécessaire, pouvant être additionné à tout moment. La composition obtenue est ensuite pompée et injectée par tous moyens connus dans la roche poreuse devant être temporairement colmatée. Après le temps de prise, le mélange se gélifie et bouche les pores de la roche. Lorsque le décolmatage est nécessaire, on procède à l'injection d'une solution alcaline (soude, potasse ou lithine) dont la concentration peut être comprise entre 2 et 20 %. Cette solution, injectée sous pression, pénètre lentement dans la roche dont la perméabilité résiduelle n'est pas totalement nulle, et dissout le gel au fur et à mesure de son avancement. Le temps de destruction du gel dépend de l'épaisseur de la couche traitée, de la formulation initiale du gel et des conditions du gisement. La solution obtenue après dissolution du gel ne contient pas de particules solides ni de précipités colmatants, ce qui permet de restaurer la perméabilité initiale de la zone productrice.

Selon un mode de mise en œuvre particulier, il peut être utile, en fonction de la nature du gisement, de procéder à une pré-injection de la zone à traiter à l'aide d'une solution alcaline, par exemple une solution de soude, de concentration comprise entre 4 et 8 %. Ce front de soude, devant le colmatage, permet de s'assurer de la parfaite dissolution du gel lors du décolmatage par un maintien de la zone traitée à pH élevé.

Le procédé selon l'invention peut être appliqué notamment dans des opérations de forage, de reconditionnement de puits et de récupération tertiaire. En cours de forage, les pertes de circulation de boues nécessitent un colmatage rapide et efficace qui, de manière conventionnelle, est effectué à l'aide de mélanges de ciments ou de résines. Selon le procédé de l'invention, on injecte la composition aqueuse contenant le silicate et l'agent gélifiant à l'intérieur des zones à perte de circulation, on laisse gélifier le silicate, et après conditionnement du puits, on injecte par l'intermédiaire de la tige une solution alcaline de manière à détruire le gel. Contrairement aux procédés de l'art antérieur, le procédé selon l'invention permet de récupérer totalement la zone colmatée afin de tester cette zone (zone à huile ou à eau).

Le procédé de l'invention est également applicable pour le forage de multiples zones productrices. Conventionnellement, lors du forage d'une zone productrice, afin de ne pas endommager cette zone, on procède à un changement de boue, moins contaminant mais moins efficace. Le procédé selon l'invention peut être mis en œuvre pour colmater temporairement cette zone, de manière à continuer le forage vers une autre zone productrice, la même boue pouvant être utilisée. Après destruction du gel, la zone productrice est récupérée.

Le procédé de l'invention est encore applicable dans les opérations de reconditionnement de puits de production. Les fluides de reconditionnement utilisés pour « tuer » le puits font en général beaucoup de dégâts : réduction de la perméabilité absolue de la formation et de sa perméabilité relative à l'huile, augmentation de la viscosité du fluide du réservoir. Il est donc utile de protéger la zone productrice. Dans le cas de complétion multiple, il peut être nécessaire d'isoler des zones de pression différente. Le colmatage temporaire par le procédé de l'invention permet d'isoler efficacement la ou les zones productrices, puis, après destruction du gel, de remettre le ou les réservoirs en production, en restaurant la perméabilité initiale de la roche.

Le procédé de l'invention peut encore être mis en œuvre pour récupérer l'huile des réservoirs par injection d'eau (waterflooding). Au cours de cette opération, les différences de perméabilité ont une grande importance quant à l'efficacité de la récupération. L'eau injectée vers le puits producteur chemine préférentiellement à travers les zones de haute perméabilité, au détriment des zones de basse perméabilité en créant plus ou moins rapidement une arrivée d'eau (« breakthrough ») dans le réservoir d'huile à faible perméabilité. Afin d'éviter ce phénomène, selon un mode de mise en œuvre particulier du procédé de l'invention, un coulis de silicate est injecté à travers un puits d'injection en quantité suffisante pour pénétrer dans les zones les plus perméables de la formation en créant un colmatage sélectif de ces zones ; après la prise du gel une solution alcaline est injectée par le puits d'injection pour détruire le gel jusqu'à obtention d'un « breakthrough » de solution alcaline dans la zone de faible perméabilité ; enfin l'injection d'eau (waterflooding) est reprise pour pousser l'huile vers un ou plusieurs puits producteurs. La quantité de solution alcaline à injecter peut être contrôlée en surface par la chute de pression dès qu'un « breakthrough » se produit. Le procédé a pour effet de rectifier le profil de balayage de l'eau et de l'huile, avec une diminution de la production d'eau et une augmentation de la production en huile. Par ailleurs, le front de solution alcaline de silicate après destruction du gel, permet de former des surfactants in situ, de baisser les tensions superficielles et de réduire l'adsorption des surfactants, d'où il résulte un balayage plus efficace et une récupération en huile améliorée.

L'invention est illustrée à l'aide des exemples suivants :

Exemple 1

On utilise une carotte en grès de Fontainebleau de 7,45 cm de longueur et 3,8 cm de diamètre, enrobée de résine époxy sur sa partie longitudinale. La perméabilité initiale, mesurée à l'eau est de 3 000 millidarcys (mD). Par l'une des extrémités, on injecte à 60 °C sous pression de 1 bar 5 volumes poreux d'une solution aqueuse de silicate de sodium et d'agent gélifiant ayant un rapport $SiO_2/Na_2O$ de 3,3, une concentration en silice de 11,4 % et un coefficient de neutralisation de 0,3. L'agent gélifiant est un mélange de succinate, glutarate et adipate de n. propyle (Marque COFENEX P commercialisé par la Société Rhône-Poulenc Spécialités Chimiques).

Le temps de prise à 60 °C est de 2 heures.

Après 16 heures à 60 °C, la perméabilité mesurée à l'eau est de 10 mD. Après 10 jours à la même température, la perméabilité n'a pas varié.

On injecte alors à 60 °C et sous pression initiale de 1 bar, une solution de soude à 4 %. Après injection de 5 volumes poreux, la perméabilité est de 2 240 mD. Après injection de 10 volumes poreux elle est de 3 000 mD.

La perméabilité initiale de la roche est totalement récupérée.

Exemple 2

On utilise une carotte en grès de Berea (longueur 7,45 cm Diamètre 3,8 cm) ayant une perméabilité initiale mesurée à l'eau de 400 mD.

On opère à 60 °C.

La carotte, saturée au fuel domestique a une perméabilité relative de 180 mD. Après désaturation à l'eau, la perméabilité relative à l'eau est de 40 mD.

On sature à nouveau au fuel puis on injecte 5 volumes poreux d'une solution aqueuse de silicate et d'agent gélifiant, ayant les mêmes caractéristiques que dans l'exemple 1, sous une pression de 3 bars. Après 16 heures, la perméabilité résiduelle mesurée au fuel est de 2 mD.

On décolmate la roche à l'aide d'une solution de soude à 8 %, à 60 °C sous une pression initiale de 3 bars. Aprés avoir passé 7 volumes poreux, la perméabilité relative mesurée au fuel est de 200 mD pour une perméabilité relative initiale de 180 mD. Après désaturation à l'eau, la perméabilité relative est de 60 mD.

Exemple 3

On utilise une carotte en grès de BEREA (longueur 7,45 cm diamètre 3,8 cm) avant une perméabilité initiale mesurée à l'eau de 200 mD.

On opère à 60 °C.

La carotte saturée au fuel domestique a une perméabilité relative de 100 mD. Après désaturation à l'eau distillée, la perméabilité relative à l'eau est de 16 mD.

On injecte sous une pression de 3 bars 5 volumes poreux d'une solution aqueuse de silicate de sodium et d'agent gélifiant ayant un rapport $SiO_2/Na_2O$ de 3,3 une concentration en silice de 22,8 % et un coefficient de neutralisation de 0,6. L'agent gélifiant a les mêmes caractéristiques que dans l'exemple 1.

Après 16 heures, la perméabilité relative résiduelle mesurée au fuel dans le sens de l'injection du silicate est de 3 mD.

La perméabilité relative résiduelle mesurée au fuel en sens inverse de l'injection du silicate est de 8 mD. On décolmate la roche à l'aide d'une solution de soude à 8 % à 60 °C sous une pression initiale de 3 bars. Après avoir passé 15 volumes poreux, la perméabilité relative mesurée au fuel est de 94 mD pour une perméabilité initiale de 100 mD. Après désaturation à l'eau, la perméabilité est de 14 mD pour une perméabilité initiale de 16 mD.

## Revendications

1. Procédé de colmatage réversible dans une formation souterraine pénétrée par un puits de forage caractérisé en ce que :

on injecte dans la formation une composition aqueuse comprenant un silicate de métal alcalin et un agent gélifiant ;

on laisse gélifier la composition et on maintient le gel pendant le temps désiré pour le colmatage ;

puis on injecte une solution alcaline de manière à détruire le gel.

2. Procédé de colmatage réversible selon la revendication 1, caractérisé en ce que l'on injecte une composition aqueuse comprenant un silicate de métal alcalin et un agent gélifiant dans laquelle le rapport molaire $SiO_2/M_2O$ est compris entre 2,5 et 5, la concentration en silice est comprise entre 5 et 25 % en poids par rapport au volume total de la composition et le coefficient de neutralisation est compris entre 0,25 et 1, puis on laisse gélifier la composition, la perméabilité étant réduite à une valeur suffisamment faible pour étanchéifier la formation colmatée à l'eau, a l'huile et aux fluides de forage et de traitement tout en permettant la pénétration ultérieure d'une solution alcaline destructrice du gel dans les conditions de température et de pression utilisées.

3. Procédé selon la revendication 2 caractérisé en ce que la perméabilité résiduelle de la formation est comprise entre 1 et 10 millidarcys.

4. Procédé selon la revendication 1 ou 2, caractérisé en ce que l'agent gélifiant est choisi dans le groupe des diesters aliphatiques, des diacides aliphatiques en $C_4$-$C_{10}$ dans lesquels le groupe alkyle contient 2 à 6 atomes de carbone, des diesters aliphatiques, des acides phtaliques dans lesquels le groupe alkyle contient 2 à 6 atomes de carbone, des phosphates de dialkyle et de trialkyle dans lesquels le groupe alkyle contient 2 à 6 atomes de carbone, des lactones, des alkylamides en $C_3$-$C_6$ et leurs mélanges.

5. Procédé selon la revendication 4 caractérisé en ce que l'agent gélifiant est constitué d'un ou plusieurs diesters alkyliques de diacides en $C_4$-$C_6$ dans lequel le groupe alkyle contient de 2 à 6 atomes de carbone.

6. Procédé selon la revendication 5 caractérisé en ce que l'agent gélifiant est un mélange de succinate, de glutarate et d'adipate de dipropyle.

7. Procédé selon la revendication 5 caractérisé en ce que l'agent gélifiant est un mélange de succinate, de glutarate et d'adipate de dibutyle.

8. Procédé selon la revendication 1 ou 2 caractérisé en ce que le silicate de métal alcalin est un silicate de soude de rapport molaire $SiO_2/Na_2O$ compris entre 3 et 4.

9. Procédé selon l'une des revendications 1 à 8 caractérisé en ce que la composition aqueuse comprend en outre un agent tensioactif.

10. Procédé selon l'une des revendications 1 à 9 caractérisé en ce que la solution alcaline utilisée pour détruire le gel a une concentration comprise entre 2 et 20 % en poids.

11. Procédé selon l'une des revendications 1 à 8 caractérisé en ce que, préalablement à l'injection de la composition de silicate, on injecte une solution alcaline de concentration comprise entre 4 et 8 %.

12. Mise en œuvre du procédé selon l'une des revendications 1 à 11 pour colmater temporairement une zone à perte de circulation au cours du forage.

13. Mise en œuvre du procédé selon l'une des revendications 1 à 11 pour colmater temporairement au moins une zone productrice au cours du forage.

14. Mise en œuvre du procédé selon l'une des revendications 1 à 11 pour colmater temporairement au moins une zone productrice au cours d'une opération de reconditionnement du puits.

15. Mise en œuvre du procédé selon l'une des revendications 1 à 11 dans une opération de récupération tertiaire par injection d'un fluide pour colmater temporairement une zone de haute perméabilité et rectifier le profil de balayage par le liquide d'injection.

16. Mise en œuvre du procédé selon l'une des revendications 1 à 11 dans une opération de récupération tertiaire par injection de fluide caractérisé en ce qu'un coulis de silicate et d'agent gélifiant est injecté à travers un puits d'injection en quantité suffisante pour pénétrer dans les zones les plus perméables de la formation et créer un colmatage sélectif de ces zones avec peu ou pas de gel dans les zones de faible perméabilité, puis une solution alcaline est injectée par le puits d'injection pour détruire le gel jusqu'à obtention d'un « breakthrough » de solution alcaline de silicate dans la zone de faible perméabilité, et l'injection de fluide est reprise pour pousser l'huile vers le ou les puits producteurs.

## Claims

1. Process for reversible plugging in an underground formation entered by a drilling well, characterized in that :

an aqueous composition comprising an alkali metal silicate and a gelling agent is injected into the formation ;

the composition is left to gel and the gel is maintained for the time required for the plugging ;

and an alkaline solution is then injected in order to destroy the gel.

2. Reversible plugging process according to Claim 1, characterized in that there is injected an aqueous composition comprising an alkali metal silicate and a gelling agent, in which the molar ratio $SiO_2/M_2O$ is between 2.5 and 5, the concentration of silica is between 5 and 25 % by weight based on the total volume of the composition and the neutralization coefficient is between 0.25 and 1, and the composition is then left to gel, the permeability being reduced to a sufficiently low value to seal the plugged formation against water, oil and drilling and treatment fluids, while allowing the subsequent entry of an alkaline solution which destroys the gel under the temperature and pressure conditions employed.

3. Process according to Claim 2, characterized in that the residual permeability of the formation is between 1 and 10 millidarcys.

4. Process according to Claim 1 or 2, characterized in that the gelling agent is chosen from the group of aliphatic diesters of $C_4$-$C_{10}$ aliphatic diacids in which the alkyl group contains 2 to 6 carbon atoms, of aliphatic diesters of phthalic acids in which the alkyl group contains 2 to 6 carbon atoms, of dialkyl and trialkyl phosphates in which the alkyl group contains 2 to 6 carbon atoms, of lactones, of $C_3$-$C_6$ alkylamides and mixtures thereof.

5. Process according to Claim 4, characterized in that the gelling agent consists of one or more alkyl diesters of $C_4$-$C_6$ diacids in which the alkyl group contains from 2 to 6 carbon atoms.

6. Process according to Claim 5, characterized in that the gelling agent is a mixture of dipropyl succinate, glutarate and adipate.

7. Process according to Claim 5, characterized in that the gelling agent is a mixture of dibutyl succinate, glutarate and adipate.

8. Process according to Claim 1 or 2, characterized in that the alkali metal silicate is a sodium silicate with a molar ratio $SiO_2/Na_2O$ of between 3 and 4.

9. Process according to one of Claims 1 to 8, characterized in that the aqueous composition additionally comprises a surface-active agent.

10. Process according to one of Claims 1 to 9, characterized in that the alkaline solution employed to destroy the gel has a concentration of between 2 and 20 % by weight.

11. Process according to one of Claims 1 to 8, characterized in that, before the injection of the silicate composition, an alkaline solution with a concentration of between 4 and 8 % is injected.

12. Use of the process according to one of Claims 1 to 11 in order temporarily to plug a lost circulation zone during drilling.

13. Use of the process according to one of Claims 1 to 11 in order temporarily to plug at least one production zone during drilling.

14. Use of the process according to one of Claims 1 to 11 in order temporarily to plug at least one production zone during a well-workover operation.

15. Use of the process according to one of Claims 1 to 11 in a tertiary workover operation by injecting a fluid in order temporarily to plug a high permeability zone and to correct the injection liquid scavenging profile.

16. Use of the process according to one of Claims 1 to 11 in a tertiary workover operation by fluid injection, characterized in that a grout of silicate and of gelling agent is injected through an injection well in sufficient quantity to enter the most permeable zones of the formation and to create a selective plugging of these zones with little or no gel in the low permeability zones, an alkaline solution is then injected through the injection well to destroy the gel until a « breakthrough » of alkaline silicate solution is produced in the low permeability zone, and the injection of fluid is restarted in order to push the oil towards the production well or wells.

**Patentansprüche**

1. Verfahren zum umkehrbaren Verstopfen einer unterirdischen Formation, in die ein Bohrloch niedergebracht ist, dadurch gekennzeichnet, daß man :

in die Formation ein wäßriges Mittel injiziert, das ein Alkalisilicat und ein Geliermittel enthält, das Mittel gelieren läßt und das Gel während der für die Verstopfung gewünschten Zeit(spanne) aufrechterhält,

und dann eine alkalische Lösung so injiziert, daß sie das Gel zerstört.

2. Verfahren zum umkehrbaren Verstopfen nach Anspruch 1, dadurch gekennzeichnet, daß man ein wäßriges Mittel injiziert, das ein Alkalisilicat und ein Geliermittel enthält, bei dem das Molverhältnis $SiO_2/M_2O$ 2,5 bis 5 beträgt, die Konzentration an Kieselsäure 5 bis 25 Gew.-% ausmacht, bezogen auf das Gesamtvolumen des Mittels, und der Neutralisationskoeffizient zwischen 0,25 und 1 liegt, daß man dann das Mittel gelieren läßt, wobei die Permeabilität auf einen ausreichend kleinen Wert verringert wird, damit die verstopfte Formation dicht gegenüber Wasser, Öl und gegenüber den Bohr und Behandlungsflüssigkeiten wird und dabei das spätere Eindringen einer alkalischen Lösung ermöglicht, die das Gel unter den angewandten Bedingungen der Temperatur und des Druckes zerstört.

3. Verfahren nach Anspruch 2, dadurch gekennzeichnet, daß die Rest-Permeabilität der Formation 1 bis 10 Millidarcy beträgt.

4. Verfahren nach Anspruch 1 oder 2, dadurch gekennzeichnet, daß das Geliermittel ausgewählt wird aus der Gruppe der aliphatischen Diester der aliphatischen $C_4$-$C_{10}$ Dicarbonsäuren, bei denen die Alkylgruppe 2 bis 6 Kohlenstoffatome enthält, der aliphatischen Diester der Phthalsäuren, bei denen die Alkylgruppe 2 bis 6 Kohlenstoffatome enthält, der Dialkyl- und Trialkylphosphate, bei denen die Alkylgruppe 2 bis 6 Kohlenstoffatome enthält, der Lactone, der $C_3$-$C_6$ Alkylamide und deren Gemische.

5. Verfahren nach Anspruch 4, dadurch gekennzeichnet, daß das Geliermittel aus einem oder mehreren Alkyldiestern von $C_4$-$C_6$ Di-carbonsäuren besteht, bei denen die Alkylgruppe 2 bis 6 Kohlenstoffatome enthält.

6. Verfahren nach Anspruch 5, dadurch gekennzeichnet, daß das Geliermittel ein Gemisch aus Dipropyl-succinat, -glutarat und -adipat ist.

7. Verfahren nach Anspruch 5, dadurch gekennzeichnet, daß das Geliermittel ein Gemisch aus Dibutyl-succinat, -glutarat und -adipat ist.

8. Verfahren nach Anspruch 1 oder 2, dadurch gekennzeichnet, daß das Alkalisilicat ein Natriumsilicat mit einem Molverhältnis $SiO_2$/$Na_2O$ von 3 bis 4 ist.

9. Verfahren nach einem der Ansprüche 1 bis 8, dadurch gekennzeichnet, daß das wäßrige Mittel zusätzlich ein grenzflächenaktives Mittel enthält.

10. Verfahren nach einem der Ansprüche 1 bis 9, dadurch gekennzeichnet, daß die für die Zerstörung des Gels eingesetzte alkalische Lösung eine Konzentration von 2 bis 20 Gew.-% aufweist.

11. Verfahren nach einem der Ansprüche 1 bis 8, dadurch gekennzeichnet, daß man vor dem Injizieren des Silicatmittels eine alkalische Lösung in einer Konzentration von 4 bis 8 % injiziert.

12. Anwendung des Verfahrens nach einem der Ansprüche 1 bis 11 für die zeitweilige Verstopfung einer Zone mit Zirkulationsverlust während der Bohrung.

13. Anwendung des Verfahrens nach einem der Ansprüche 1 bis 11 für die zeitweilige Verstopfung mindestens einer Produktionszone während der Bohrung.

14. Anwendung des Verfahrens nach einem der Ansprüche 1 bis 11 für die zeitweilige Verstopfung mindestens einer Produktionszone während eines Arbeitsganges der Wiederherrichtung der Bohrlöcher.

15. Anwendung des Verfahrens nach einem der Ansprüche 1 bis 11 während eines Arbeitsganges der tertiären Ausbeutung durch Injizieren eines Fluids, um zeitweilig eine Zone hoher Permeabilität zu Verstopfen und das Spülprofil mit der Injektionsflüssigkeit zu begradigen.

16. Anwendung des Verfahrens nach einem der Ansprüche 1 bis 11 bei der tertiären Ausbeutung mittels Injektion eines Fluids, dadurch gekennzeichnet, daß ein Brei aus Silicat und Geliermittel durch ein Injektionsbohrloch in ausreichender Menge injiziert wird, um in die am stärkten durchlässigen Zonen der Formation einzudringen und eine selektive Verstopfung dieser Zonen zu bewirken mit wenig oder keinem Gel in den Zonen geringer Permeabilität, und daß anschließend eine alkalische Lösung über die Injektionsbohrung injiziert wird, um das Gel zu zerstören, bis ein Durchbruch von alkalischer Silicatlösung in die Zone geringer Permeabilität erreicht wird, worauf die Injektion des Fluids wiederaufgenommen wird, um das Öl zu den Förderbohrungen zu treiben.